# EUROPEAN PATENT APPLICATION

(11) **EP 2 083 466 A1**
(43) Date of publication of application: **29.07.2009**
(21) Application number: 08100865.8
(22) Date of filing: 24.01.2008
(51) Int. Cl.: H01M 4/86, H01M 4/88, H01M 8/12, C23C 14/35, C23C 14/08

(54) **Process for the fabrication of a sputter deposited fully dense electrolyte layer embedded in a high performance membrane electrolyte assembly of solid oxide fuel cell**

(71) Applicant: Institute of Nuclear Energy Research, No. 1000, Wunha Road Jiaan Village Longtan Township TaoyuanCounty 32546 (TW)
(72) Inventor: Lin, Tai-Nan Inst. of Nuclear Energy Research, 32546, Taoyuan County (TW); Lee, Maw-Chwain Inst. of Nuclear Energy Research, Longtan Township 32546, Taoyuan County (TW); Kao, Wei-Xin Inst. of Nuclear Energy Research, Lomgtan Township 32546, Taoyuan County (TW); Chang, Yang-Chuang Inst. of Nuclear Energy Research, Longtan Township 32546, Taoyuan County (TW); Wang, Chun-Hsiu Inst. of Nuclear Energy Research, Longtan Township 32546, Taoyuan County (TW); Lin, Li-Fu Inst. of Nuclear Energy Research, Longtan Township 32546, Taoyuan County (TW)
(74) Representative: Lermer, Christoph

(57) **Abstract**

The innovation process describes the process and results for fabrication of a magnetron sputter deposited fully dense electrolyte layer (8YSZ/GDC/LSGM) embedded in a high performance membrane electrolyte assembly (MEA) (Unit Cell) of Solid Oxide Fuel Cell. A single cell with airtight electrolyte layer (8YSZ/GDC/LSGM) is prepared via thin film technique of magnetron sputter deposition, combined with SOFC-MEA processing methods (such as tape casting, lamination, vacuum hot pressing, screen printing, spin coating, and plasma spray coating) and sintering optimization conditions. The gas permeability of the electrolyte layer is below 1×10⁻⁶ L/cm²/see and the open circuit voltage/power density of the single cell performance test exceeds 1.0 V and 500 m W/cm².

## Description

### Background of the Invention

### 1. Field of the Invention

The invention relates to a manufacturing process for the electrolyte layer of solid oxide fuel cell. Especially it relates to a manufacturing process for a membrane, i.e. magnetron sputtering. It is also combined with the manufacturing process for membrane electrode assembly (MEA), like tape casting, lamination, vacuum hot pressing, screen printing, spin coating or plasma spray coating et al. and optimized sintering technology in a novel process for fully dense electrolyte to produce air-tight electrolyte layer for solid oxide fuel cell.

### 2. Description of the Prior Art

With rising oil price and consciousness of environmental protection, renewable energy technology has become one of the most important technological development in this century. Solid oxide fuel cell is a power generation system that has high efficiency, low pollution and diversified energy sources. Its simple material composition, modulized structure and sustainable and stable power generation ability make it the power generation system of the most potential.

Electrolyte supported cell (ESC) has its operation temperature between 800 - 1000^{°}C. Its electrolyte substrate thickness is around 150 - 300 µm. This is the first generation of SOFC-MEA. Anode supported cell (ASC) has its operation temperature between 650-800^{°}C. Its electrolyte substrate thickness is around 10µm. This is the second generation of SOFC-MEA. (NiO + 8YSZ) is the anode material for ASC/ESC, while the main cathode material is LSM and LSCF with thickness between 30 - 60µm. New electrolyte materials and cathode materials are under development in many research laboratories in the world. They all hope to develop new materials so the operation temperature for SOFC-MEA will drop to 500 - 700^{°}C. Then the components for SOFC Stack, like Inter-connector etc., can change from ceramic materials to metal materials, which are not only easy for manufacturing but also increase mechanical stability and durability, and also reduce overall cost. The development for this technology in universities and national laboratories emphasize material development and expect to develop novel materials to reduce resistance, increase ion conductivity and improve SOFC power generation.

### Summary of the Invention

The main objective for the invention is to develop the manufacturing process for solid oxide fuel cell that has fully dense electrolyte layer.

To achieve the above objective, it is proposed that the process is mainly a magnetron sputtering process, which is also combined with the manufacturing process for membrane electrode assembly (MEA), like tape casting, lamination, vacuum hot pressing, screen printing, spin coating or plasma spray coating et al. and optimized sintering technology in a novel process for fully dense electrolyte to produce air-tight electrolyte layer for solid oxide fuel cell. The magnetron sputtering process referred in the invention comprises (1) RF magnetron sputtering with oxide target (2) reactive magnetron sputtering with sputtering metal alloy target, including DC and RF. Take anode supported cell (ASC) as example. The process in this invention uses magnetron sputtering technology to produce electrolyte membrane on anode substrate, and then uses high-temperature sintering to produce half-cell structure, and then uses screen printing technology to coat cathode layer onto the electrolyte surface of the half-cell. Therefore, this invention can produce solid oxide fuel cell of anode supported cell with fully dense electrolyte layer.

The above and other objects, features and advantages of the present invention will become apparent from the following detailed description taken with the accompanying drawings.

### Brief Description of the Drawings

Figure 1 is a process diagram of the present invention.
Figure 2 is SEM picture of the cross-sectional microstructure for the solid oxide fuel cell through membrane technology and sintering in the invention: (a) structure of the half cell with electrolyte made of oxide target; (b) surface morphology of the electrolyte made of oxide target; (c) structure of the half cell with electrolyte made of alloy target; (d) surface morphology of electrolyte made of alloy target.
Figure 3 is the microstructure diagram of the full cell with electrolyte made of oxide target.
Figure 4 is the electrical performance testing process for the solid oxide fuel cell with electrolyte layer made of oxide target material.
Figure 5 is the JVP (current density/ voltage/ power density) diagram obtained from results of the electrical performance test of the solid oxide fuel cell (a) testing result of unit cell at different temperatures (700/750/800^{°}C); (b) testing result of unit cell at different H₂/O₂ flow rates (100% H₂/O₂ with flow rates: 200/300/400 cc/min).

### Detailed Description of the Preferred Embodiment

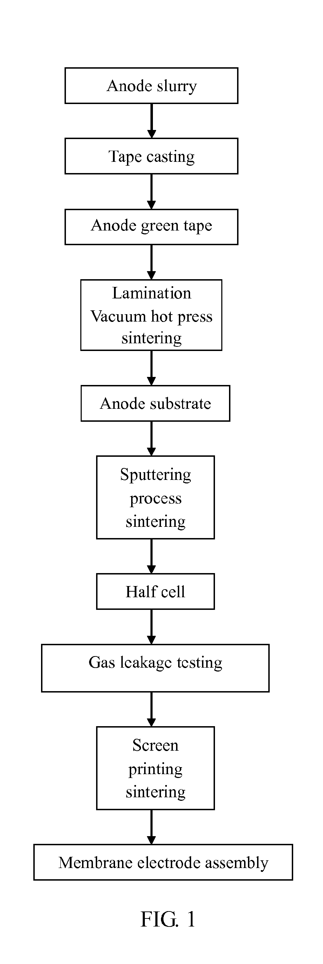

This invention refers to a process to manufacture planar solid oxide fuel cell - membrane electrolyte assembly (i.e. Unit Cell) with fully dense/zero gas leakage rate or airtight electrolyte layer, for example, 8YSZ/GDC/YDC/LSGM et al. The procedures for the manufacturing process are as follows:
Step 1: Onto the electrode substrate of planar SOFC-MEA, use magnetron sputtering to build electrolyte membrane (5∼15µm) to form half cell of SOFC. Conduct sintering for several hours (more than 3 hours) between 1200^{°}C - 1600^{°}C (preferably 1400^{°}C) to produce the first stage half cell. For this stage, the electrolyte can be YSZ, GDC, YDC, SmDC and LSGM. Use scanning electronic microscope (SEM) to analyze the microstructure for the half cell to assure that the half cell is open-pore free and fully dense.
Step 2: Onto the electrolyte layer of the half cell, use screen printing technology to build porous cathode layer, usually the material is LSM or LSCF etc.. Then conduct sintering for about 3 hours at about 1200^{°}C to complete the fabrication of SOFC-MEA. The SOFC-MEA produced from the process has high operational performance, durability and stability. The excellent properties can be verified by performance test of SOFC-MEA. The above process is the fabrication process for SOFC-MEA with fully dense/airtight electrolyte layer. A simple flow diagram for the above step 1 and step 2 is shown in Figure 1. The following describes the details of the embodiments:

### Embodiment 1:

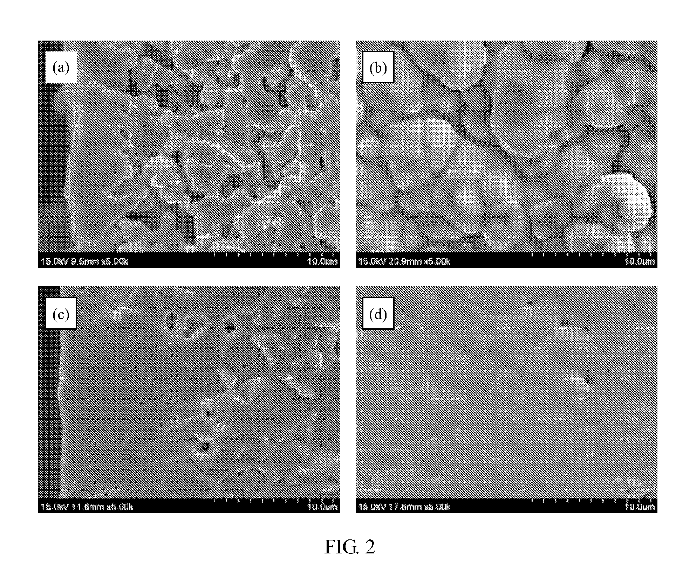

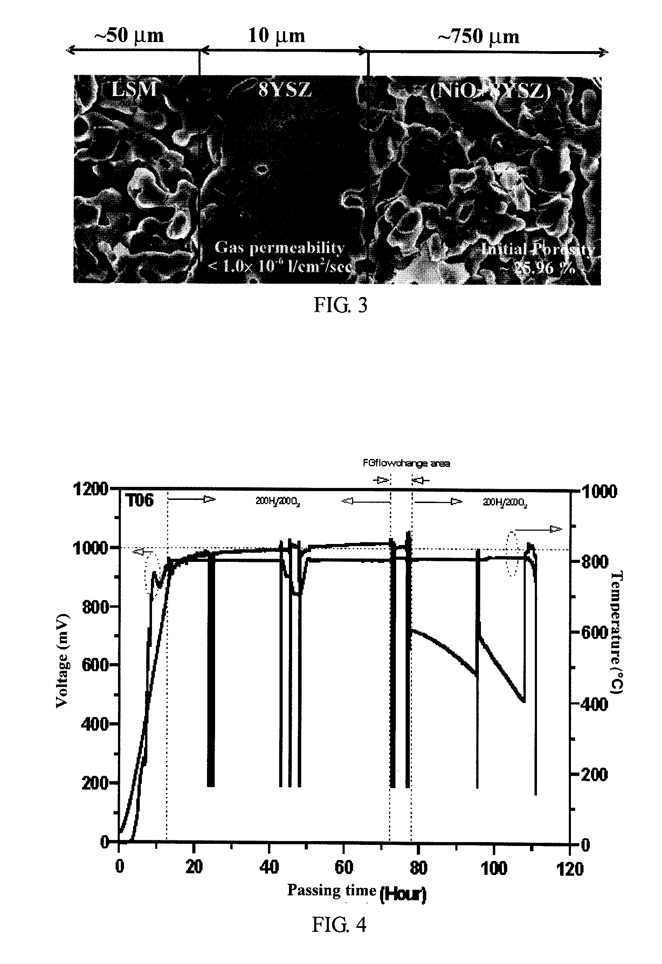

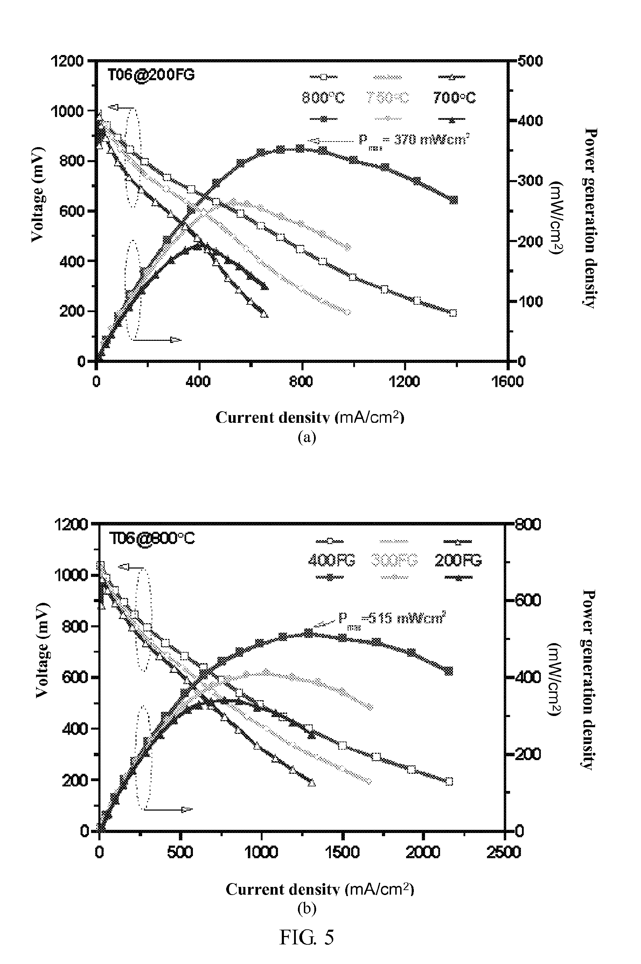

Step 1: A process to produce SOFC-MEA Unit Cell with fully dense/ airtight electrolyte layer (8YSZ/GDC/LSGM). The anode substrate for this MEA is made of 50wt% NiO+ 50wt% 8YSZ and pore former in a certain amount and graphite through tape casting, lamination and vacuum hot pressing. It has high mechanical strength. The thickness is about 1000 µm. Its size is 5×5cm² ∼ 12×12cm².
Step 2: A process to produce electrolyte membrane. Use RF magnetron sputtering (target is 8YSZ oxide) and DC magnetron sputtering (target is Zr_{X}Y₁₋ₓ alloy) to deposit electrolyte materials onto electrode substrate in thickness of 5-10 µm to form SOFC half cell. Conduct sintering for several hours (more than 3 hours) between 1200^{°}C ∼ 1600^{°}C to obtain the first stage half cell. Use SEM to analyze the microstructure for the half cell to assure that the electrolyte layer is open-pore free. As shown in Figure 2, the electrolyte thickness is about 5/10µm. There is a fully dense structure to achieve airtightness and meet the requirements for SOFC-MEA electrolyte layer. There remain only few close pores, which do not affect the airtightness and gas permeability of the electrolyte layer.
Step 3: To assure the airtightness, measure the gas permeability of the half cell obtained in step 2. If the gas permeability is below 1×10⁻⁶1/cm²/sec, it is assured that the electrolyte layer is fully dense.
Step 4: Onto the fully dense half cell from step 3, use screen printing technology to build the porous cathode layer of LSM. Then conduct sintering at 1100^{°}C for 3 hours to produce high performance SOFC-MEA (Unit cell). The cross-sectional microstructure of the unit cell observed by SEM is shown in Figure 3. The SOFC-MEA is subject to electrical testing. Power performance testing temperature is 700/750/800^{°}C. the testing atmosphere is 100% H₂/O₂. The flow rate is 200/300/400 cc/min. the testing time is more than 120 hours. There is no sign of performance degradation after testing. The result of testing process is shown in Figure 4. The open circuit voltage (OCV) is stable and close to theoretical value. The maximum values of OCV and power density are up to 1.06V and 515mW/cm² at 800°C, respectively(as shown in Figure 5). This indicates that the electrolyte layer produced by sputtering process is dense and stable. The unit cell has high performance. The results prove the excellence, innovation and technological criticalness for the manufacturing process of this invention. The invention should meet requirements for patent application, which is thereafter submitted.

The above process is merely an example for the invention, not to limit the scope for the invention. Those simple and equivalent alteration or modification based on the description of the invention shall be covered by the scope of the invention.

## Claims

1. A manufacturing process for planar SOFC-MEA with fully dense electrolyte layer uses membrane fabrication process that is primarily magnetron sputtering, and facilitated by tape casting, screen printing, spin coating or plasma spray coating, and combines optimized sintering process, comprising the following steps:
a. produce SOFC electrode substrate;
b. onto electrode substrate, use magnetron sputtering to produce SOFC half cell; the magnetron sputtering process comprises (1) RF magnetron sputtering with oxide target materials, and (2) reactive magnetron sputtering with metal alloy target materials;
c. use high-temperature sintering for anode/electrolyte half cell to produce half cell; sintering temperature is about 1400^{°}C; sintering time is about 6 hours; conduct gas permeability testing and use SEM to investigate its microstructure to assure the full densification of electrolyte layer ; if fully dense structure is achieved, for example, gas permeability less than 1×10⁻⁶ L/cm²/sec, go to step d; otherwise, open pores still exist, further adjust sintering condition to achieve fully dense structure;
d. onto the half cell with fully dense electrolyte layer (HC-fd), use screen printing to build a layer of cathode material; conduct sintering at 1100^{°}C for about 3 hours to complete the production of full unit cell; conduct electrical performance testing and power density measurement to characterize unit cell performance.

2. As described in claim 1 the manufacturing process for planar SOFC-MEA with fully dense electrolyte layer, the electrolyte materials can be, but not limited to, YSZ, GDC, LSGM, SDC and YDC.

3. As described in claim 1 for the manufacturing process for planar SOFC-MEA with fully dense electrolyte layer, the electrode substrate in step a can be anode substrate or electrolyte substrate, and their materials can be, but not limited to, YSZ + NiO, GDC+NiO, LSGM+NiO, SDC+NiO, YDC+NiO and YSZ, GDC, LSGM, SDC, YDC, respectively, a weight percent for electrolyte, for example, YSZ, and anode catalyst material NiO can be, but not limited to, 30∼65wt%.

4. As described in claim 1 the manufacturing process for planar SOFC-MEA with fully dense electrolyte layer, the magnetron sputtering in step b comprises (1) dual-gun co-sputter that onto electrode substrate builds electrolyte layer or functional interlayer, or (2) dual-gun co-sputter that onto electrolyte substrate builds electrode layer or functional interlayer, which SOFC electrolyte layer or electrode layer process can be, but not limited to, sputtering, screen printing, spin coating and plasma spray coating technology.

5. As described in claim 1 the manufacturing process for planar SOFC-MEA with fully dense electrolyte layer, the magnetron sputtering in step b comprises (1) RF magnetron sputtering with oxide target, which can be, but not limited to, YSZ+NiO, GDC+NiO, LSGM+NiO, SDC + NiO, YDC+NiO and YSZ, GDC, LSGM, SDC and YDC; (2) reactive magnetron sputtering with metal alloy target, which can be, but not limited to Zrₓ-Y₁₋ₓ, Zrₓ-Sc₁₋ₓ, Ceₓ-Gd₁₋ₓ, Ceₓ-Sm₁₋ₓ, Ceₓ-Y₁₋ₓ(80<x<100 wt.%) and LSGM.

6. As described in claim 1 for the manufacturing process for planar SOFC-MEA with fully dense electrolyte layer, step b includes building electrolyte layer onto electrode substrate or building electrode layer onto electrolyte substrate, which process can be, but not limited to, sputtering, screen printing, spin coating, and plasma spray coating technology.

7. As described in claim 1 the manufacturing process for planar SOFC-MEA with fully dense electrolyte layer, the sintering process in step c can be, but not limited to, at 1400^{°}C for 6 hours, and sintering equipment can be, but not limited to, air-circulating high-temperature furnace; sintering temperature rate can be, but not limited to, 3^{°}C/min.

8. As described in claim 1 the manufacturing process for planar SOFC-MEA with fully dense electrolyte layer, step d includes using screen printing to build a layer of cathode material onto HC-fd, as well as sputtering, plasma spray coating and spin coating; the sintering process can be, but not limited to, 1100^{°}C/3 hrs; cathode materials can be, but not limited to, LSM and LSCF; cathode thickness can be, but not limited to, 30∼50µm, sintering temperature rate can be, but not limited to, 3^{°}C/min.

9. As described in claim 1 the manufacturing process for planar SOFC-MEA with fully dense electrolyte layer, step c includes SEM investigation of half cell structure and the densification confirmation of the electrolyte structure as well as measurement of gas permeability.
